(19) Europäisches Patentamt

European Patent Office

Office européen des brevets

(11) **EP 1 361 666 A1**

(12) **EUROPEAN PATENT APPLICATION**
published in accordance with Art. 158(3) EPC

(43) Date of publication:
**12.11.2003 Bulletin 2003/46**

(51) Int Cl.⁷: **H04B 1/40**

(21) Application number: **02716415.1**

(22) Date of filing: **28.01.2002**

(86) International application number:
**PCT/JP02/00599**

(87) International publication number:
**WO 02/061961 (08.08.2002 Gazette 2002/32)**

(84) Designated Contracting States:
**AT BE CH DE DK ES FI FR GB IE IT LI NL SE**

(30) Priority: **29.01.2001 JP 2001020673**

(71) Applicant: **NEC Corporation**
**Minato-ku, Tokyo 108-8001 (JP)**

(72) Inventor: **MOCHIZUKI, Takuji,**
**c/o NEC Corporation**
**Tokyo 108-8001 (JP)**

(74) Representative: **Moir, Michael Christopher et al**
**Mathys & Squire**
**100 Gray's Inn Road**
**London WC1X 8AL (GB)**

(54) **TIME DIVISION MULTIPLEXING CONNECTION TRANSCEIVER AND ITS RECEIVING AUTOMATIC GAIN CONTROL METHOD**

(57) An RF switch 12 is connected to a receiving unit 2 at a reception timing. An RF signal received by an antenna 11 is inputted to an amplifying unit 5 via an isolator 3 and an RF filter 4. The RF signal is subjected to automatic gain amplification and is inputted to a demodulating unit 6. An RSSI 61 detects the level of a reception signal. When the detection value is over a threshold, a demodulator 62 controls the RF switch so as to change the switch to a transmitting unit 7 which does not output and send the signal. Consequently, the input of the receiving unit is largely attenuated. The isolator maintains the matching of the input impedance of the amplifying unit and ensures the low-noise property and stability, irrespective of a switching state of the change-over switch.

FIG. 2

**Description**

Technical Field

The present invention relates to a time-division multiplexing and connecting transceiver and its automatic gain control method for reception. In particular, the present invention relates to a time-division multiplexing and connecting transceiver for transmitting and receiving a radio frequency signal based on time division at different timings by sharing an antenna and its automatic gain control method for the received signal.

Background Art

A time-division multiplexing and connecting transceiver used under an environment for external propagation in which an input electric field/input level of a receiver largely changes needs circuitry means and a method for absorbing, before demodulation, a large reception dynamic range prescribed, including the change in temperature, the eccentricity in frequency, and individual difference for the total gain of a receiving system, and for always maintaining the constant level of a demodulation signal, particularly, in the case of designing the low-noise receiving system and an automatic gain control system for reception.

In order to reduce the load of a receiving-system demodulator as signals having a large amount of capacity are received fast, generally, the reception level inputted to the demodulator and to an RSSI circuit is detected and is determined and then the demodulator properly generates a control signal so that the reception signal is compressed within an allowable input range to prevent the deterioration in level of the reception signal inputted to the demodulator. Further, the gain control operation is performed to an amplifier for the automatic gain control of an RF/IF unit.

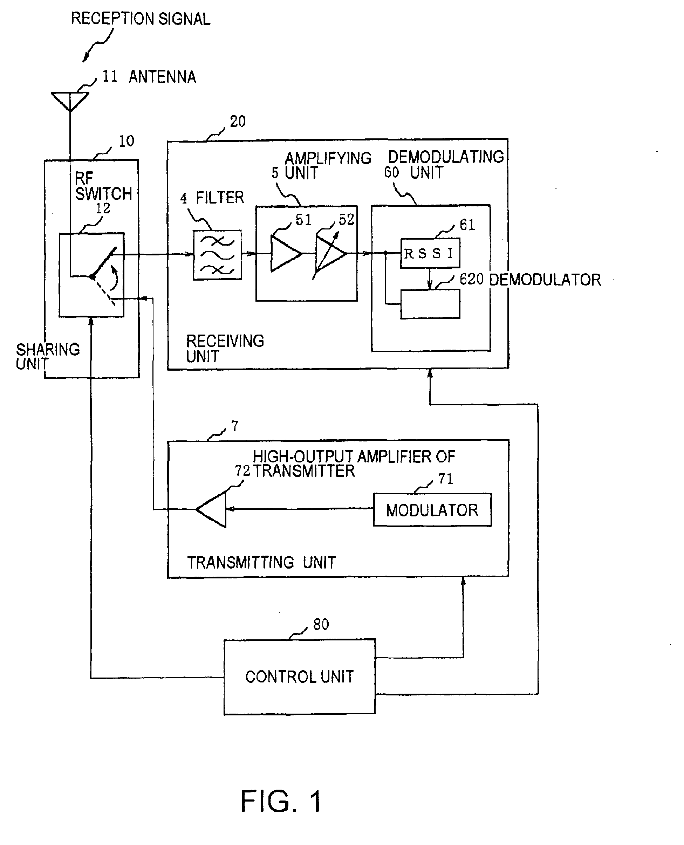

Fig. 1 shows the above-mentioned time-division multiplexing and connecting transceiver according to a conventional art. The transceiver comprises a control unit 80 for systematic control, a transmitting unit 7 for modulating and outputting transmission data as a radio frequency signal, a receiving unit 20 for receiving the radio frequency signal and demodulating it to reception data, and a sharing unit 10 having an RF switch 12 for switching and connecting an antenna 11 to the transmitting unit 7 side at the transmitting timing and for switching and connecting the antenna 11 to the receiving unit 20 side at the receiving timing under the control of the control unit 80.

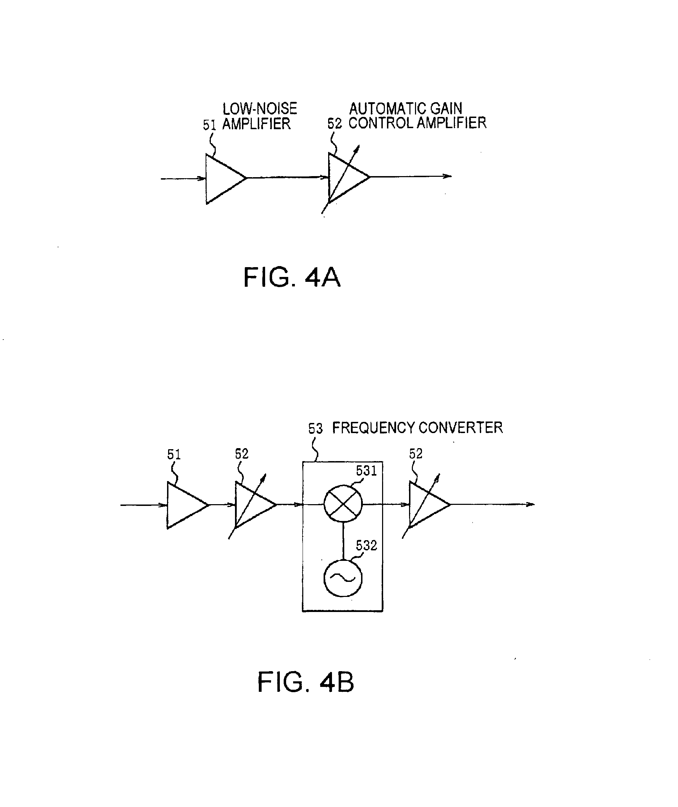

Referring to Figs. 4A to 4D, an amplifier 5 in the receiving unit 20 is variously modified. The amplifier 5 amplifies a received high-frequency signal by arbitrarily combining an automatic gain control amplifier 52 and a fixing gain amplifier 54 in accordance with the number of conversion times of an intermediate frequency (IF) after processing of a low-noise amplifier 51 as a first amplifier, and inputs the amplified signal to a demodulator 60.

Especially, a system for processing data having a large capacity at a high speed under an environment for external propagation in which a electric field for reception largely changes at the high speed requires an RF/IF automatic gain control method having fast response property and enabling the control operation of the large amount of gain for reception.

In the above-mentioned system according to the conventional art as shown in Fig. 1, the control operation for varying the large amount of gain for reception needs a numerous number of sets of automatic gain control amplifiers in the receiving system and, thus, the circuits become complicated, large-scaled, and expensive.

Further, the fast response of the automatic gain control causes the complication of the control circuit and the RF/IF gain varying circuit and the response cannot be sent as the necessity.

It is an object of the present invention to provide a time-division multiplexing and connecting transceiver and its automatic gain control method for reception for satisfying the requirement of the automatic gain control for reception and for solving the above-described problems of the conventional art.

Disclosure of Invention

According to the present invention, there is provided a time-division multiplexing and connecting transceiver for transmitting and receiving a radio frequency signal based on time division at different timings by sharing an antenna. The time-division multiplexing and connecting transceiver comprises a change-over switch for switching and connecting the antenna to one of a transmitting system and a receiving system, and control means for switching the change-over switch and outputting a transmission signal to the antenna at a transmission timing, for determining a reception level of a reception signal at a reception timing, for switching the change-over switch to the receiving system and directly inputting the reception signal from the antenna to the receiving system when the reception level is not more than a predetermined value, and for switching the change-over switch to the transmitting system and inputting the signal largely attenuated and leaked from the antenna to the receiving system when the reception level is more than the predetermined value.

Further, according to the present invention, in the time-division multiplexing and connecting transceiver, an isolator for matching an input impedance of a first amplifier of the receiving system is arranged between the change-over switch and the first amplifier, irrespective of a switching state of the change-over switch.

The time-division multiplexing and connecting transceiver further comprises demodulating means for demodulating data from the reception signal, wherein the demodulating means comprises means for determining the reception level of the reception signal and means for switching the change-over switch to the transmitting system when the reception level is more than the predetermined value.

In the time-division multiplexing and connecting transceiver, an arbitrary number of automatic gain control amplifiers are arranged between the change-over switch and the demodulating means, as amplifiers of the radio frequency signal or an intermediate frequency signal, and the automatic gain control of the reception signal is performed individually by the change-over switch and the automatic gain control amplifier.

According to the present invention, there is provided an automatic gain control method for reception of a time-division multiplexing and connecting transceiver for transmitting and receiving a radio frequency signal based on time division at different timings by sharing an antenna. The automatic gain control method for reception comprises a step of determining a reception level of a reception signal at a reception timing, a step of switching a change-over switch for switching and connecting the antenna to one of a transmitting system and a receiving system when the reception level is not more than a predetermined value and directly inputting the reception signal from the antenna to the receiving system, and a step of switching the change-over switch to the transmitting system and inputting the signal largely attenuated and leaked from the antenna to the receiving system, when the reception level is more than the predetermined value.

In the above-mentioned steps, the automatic gain control is performed individually by the change-over switch and an automatic gain control amplifier arranged between the change-over switch and demodulating means for demodulating data from the reception signal, as an amplifier of the radio frequency signal or an intermediate frequency signal.

Brief Description of the Drawings

Fig. 1 is a block diagram showing an example of a time-division multiplexing and connecting transceiver according to the conventional art;
Fig. 2 is a block diagram showing an embodiment of the present invention when the level of a reception signal is low;
Fig. 3 is a diagram showing the embodiment of the present invention when the level of the reception signal shown in Fig. 2 is high; and
Figs. 4A to 4D are diagrams showing an example of a plurality of amplifiers in a receiving unit.

Best Mode for Carrying Out the Invention

First, a description is given of the outline of the present invention. According to the present invention, in a time-division multiplexing and connecting transceiver for data having a large capacity at a high speed under an environment for external propagation in which an electric field for reception largely changes at the high speed, a simple circuitry structure comprising a small number of gain controllers realizes an RF/IF automatic gain control for controlling the large amount of automatic gain for reception with fast response property.

According to a first feature of the present invention, attention is paid to large attenuating property between two connecting points, which are released, of a low-noise amplifier and an antenna of an RF switch used for switching a transmitting and receiving path based on time division for transmission and reception. Further, the large attenuating property is actively used as a part of an automatic gain control function. When the high level of the received electric-field signal is over a threshold of the level inputted to or detected by a demodulator or an RSSI, a mode for connecting the RF switch to the transmitting side is set simultaneously with the reception and an amplitude necessary for the large total of gain for reception is varied at the high speed by connecting and disconnecting switch so that the extreme reduction of the total gain for reception is controlled at the high speed.

According to a second feature of the present invention, an isolator is inserted between the RF switch and a first low-noise amplifier for the purpose of improving the impedance under such an impedance condition on the input side of the first low-noise amplifier that the impedance becomes constant and stable near 50 Ω irrespective of the setting mode of the RF switch.

The impedance on the input side of the first low-noise amplifier is stable near 50 Ω by inserting the isolator for input and, consequently, the low-noise property of the first low-noise amplifier is stably ensured even upon receiving the signal of high electric-field. The input level of the demodulator is converged at the high speed throughout a wide input dynamic range for reception, and the reception sensitivity is improved. As a result of inserting the isolator for input, the property of a receiver with high sensitivity (reference sensitivity property) is stably and continuously ensured within the wide electric field for reception because of the following.

That is, the automatic gain control including the RF switch is used for the wide input dynamic range for reception. In this case, a circuit for stably holding the low-noise property of the receiver is necessary irrespective of the setting state of the RF switch. Here, considerable points are the noise property and the stability of the first low-noise amplifier for determining the low-noise property of the receiver. These property largely depends on the impedance on the input load side of the first low-noise amplifier.

In general, a source impedance in views of the input load side from the input terminal of the first low-noise amplifier when the RF switch is switched to the transmitting side (disconnecting state) upon inputting the high electric field is extremely apart, and is deteriorated from a source impedance (impedance for antenna output upon setting an antenna in a free propagation space) near 50 $\Omega$ in views of the input load from the low-noise amplifier when the RF switch is normally connected to the receiving system in the low electric-field for the input.

In another view, a VSWR (voltage standing wave ratio) when the input side is viewed from the first low-noise amplifier is determined depending on the impedance (VSWR) upon disconnecting the RF switch. Generally, the VSWR of the input load is increased upon disconnecting the RF switch, namely, upon inputting the signal having the high electric field.

It is premised that the impedance of the load for input is generically 50 $\Omega$ upon connecting the antenna when designing the first low-noise amplifier. Then, the impedance of 50 $\Omega$ is converted into that for matching the best noise in views of the input load from the input of the low-noise amplifier. That is, a circuit for matching to the best noise is usually designed.

In addition to the matching to the low noise, for the purpose of ensuring the absolute stability (of preventing the unnecessary oscillation) of the first low-noise amplifier on the premise of the input load of 50 $\Omega$, an input and matching circuit of the low-noise amplifier is designed so that a K factor is 1 or more within a wide frequency range as an absolute stability condition.

The low electric field of the input is normally approximate to the above state, and the low-noise property and the stability of the first low-noise amplifier are assured.

On the contrary, the impedance for input load of the low-noise amplifier deviates and changes by disconnecting the RF switch for input at the high electric field of the input. Therefore, the matching to the best noise and the absolutely stable condition are not satisfied on the input side of the low-noise amplifier, and the unnecessary oscillation is caused by the noise deterioration and a specific frequency without or within the band.

In order to solve the above-mentioned problems, the isolator is inserted between the RF switch and the first low-noise amplifier and the impedance is improved on the input side of the first low-noise amplifier.

Next, a detailed description is given of an embodiment of the present invention with reference to the drawings.

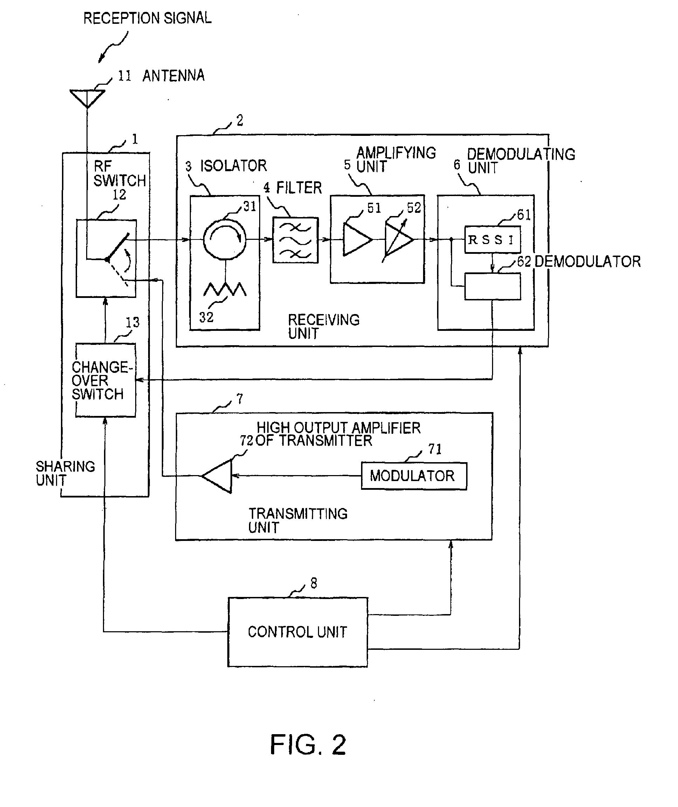

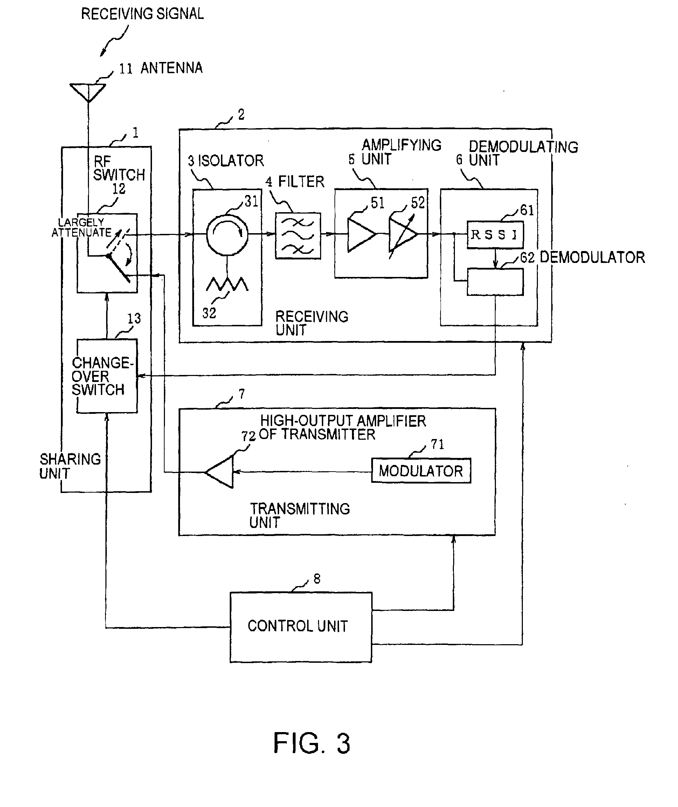

Figs. 2 and 3 are block diagrams showing the embodiment of the present invention. Fig. 2 is a diagram for mainly explaining the entire structure of a receiver and a state of an RF switch 12 upon reception at the low electric field of the input (in a connecting mode on the reception side and with a small switch loss) as a transmitting and receiving state. Fig. 3 is a diagram for mainly explaining the entire structure of the receiver and the state of the RF switch 12 upon reception at the high electric-field of the input (in a disconnecting state for reception on the transmitting side with a large switch loss, namely, high attenuation) as the transmitting and receiving state. Referring to Fig. 2, a time-division multiplexing and connecting transceiver comprises a sharing unit 1, a receiving unit 2 (receiving system), a transmitting unit 7 (transmitting system), and a control unit 8.

The sharing unit 1 comprises an antenna 11 for transmitting and receiving a radio frequency signal (RF signal) by using radio waves, an RF switch 12 for switching the connection of the antenna 11 to the receiving unit 2 side or to the transmitting side 7 side, and a change-over switch 13 for controlling the switching operation of the connection of the RF switch 12 under the control of the control unit 8 and the receiving unit 2.

The receiving unit 2 includes a circulator 31 and a terminal unit 32 (50 $\Omega$), and further comprises an isolator 3 for outputting an RF signal received from the RF switch 12, which is inputted to the input side, and for guiding a reflection signal from the latter component, which is inputted to the output side, a high-frequency filter (RF filter) 4 for passing and attenuating a signal having a predetermined band of the RF signal received from the isolator 3, an amplifying unit 5 for amplifying the RF signal received from the RF filter 4, and a demodulating unit 6 for demodulating (reproducing data) the RF signal received from the amplifying unit 5.

The RF filter 4 assures the property for selecting the reception so as to prevent receiving blocking (sensitivity suppression/deterioration) caused by external blocking wave. The RF filter 4 individually uses a band pass filter, s low pass filter, or a band elimination filter, depending on the situation.

The amplifying unit 5 comprises a low-noise amplifier 51 and an automatic gain control amplifier 52. However, the present invention is not limited to this and can use amplifiers according to modifications as shown in Figs. 4A to 4D.

An example shown in Fig. 4A is the same as that shown in Fig. 2. In the example, the amplifying unit 5 comprises a plurality of amplifiers of the low-noise amplifier 51 and the automatic gain control amplifier 52. The amplifying unit 5 does not convert the signal into the intermediate frequency (IF), and directly amplifiers the signal having the frequency (RF) received by the antenna 11. The automatic gain control (AGC) in the amplifying unit 5 is performed by only the automatic gain control amplifier 52 for RF. That is, automatic gain control amplifiers including the RF switch 12 are concentrated only in the RF unit.

In an example shown in Fig. 4B, one frequency converter 53 (including a mixer 531 and a local oscillator 532) converts the frequency into the intermediate frequency (IF) once. In the example, the amplifier unit 5 comprises a plurality of amplifiers having one low-noise amplifier 51, one automatic gain control amplifier 52 for RF, and one automatic gain control amplifier 52 for IF. In other words, the automatic gain control amplifiers including the RF switch 12 are divided into an automatic gain control amplifier for the RF unit and a first automatic gain control amplifier for IF.

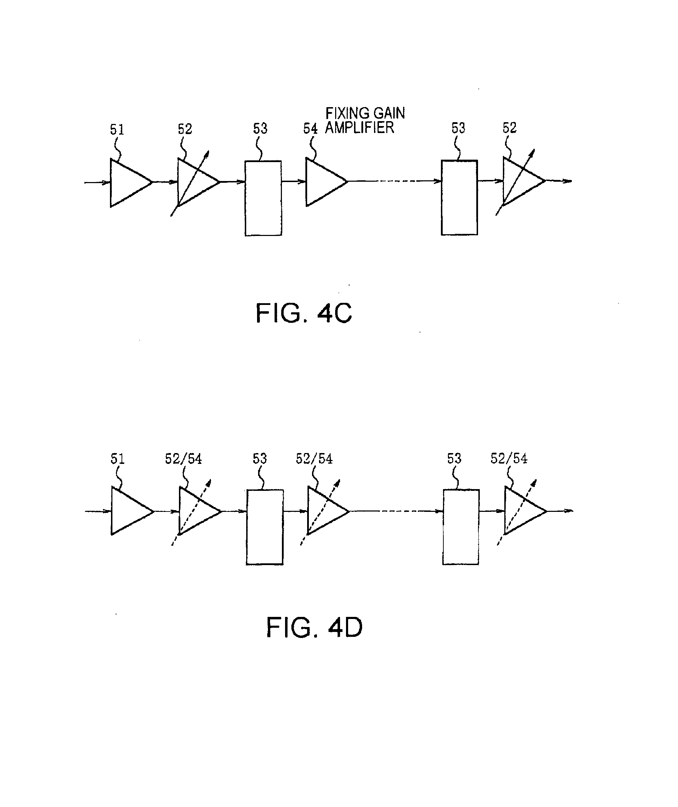

In an example shown in Fig. 4C, the IF conversion is performed by a plurality of amplifiers (not shown). In the example, the amplifying unit 5 comprises one low-noise amplifier 51, one automatic gain control amplifier 52 for RF, an automatic gain control amplifier 52 as one of arbitrary (n) amplifiers for IF, and a fixing gain amplifier 54 as another amplifier for IF. That is, the automatic gain control amplifiers including the RF switch 12 are divided into one amplifier for the RF unit and n (first to n-th) amplifiers for the IF unit.

In an example shown in Fig. 4D, the amplifying unit 5 is formed by mixing the above structures shown in Figs. 4A to 4C, and automatic gain control amplifiers including the RF switch 12 are divided into one amplifier for the RF unit and first to n-th amplifiers for the IF unit. In other words, the amplifiers for RF and IF except for the low-noise amplifier 51 can arbitrarily be set to any of the automatic gain control amplifier 52 and the fixing gain amplifier 54.

The RF switch 12 is used for switching the transmitting and receiving path based on the time division upon transmitting and receiving. Upon disconnecting the two points of the antenna 11 and the low-noise amplifying unit (the isolator 3, the RF filter 4, or the amplifying unit 5), large attenuating property is obtained (generally, the change indicating the loss of 20 to 30 dB between the connection and the disconnection exists).

The demodulating unit 6 comprises a received signal strength indicator (RSSI) 61, and a demodulator 62. The RSSI 61 is a signal strength detector for detecting the level of the reception signal for absolutely detecting the strength of the reception signal.

The demodulator 62 demodulates data from the reception signal. In this case, the demodulator 62 detects the wide reception level, transmits the necessary control amount to corresponding gain varying means, and controls it. A digital calculating unit incorporated in the demodulator 62 calculates which levels are controlled by the gain variation so that the necessary control amount absorbs the wide range (because the wide range excesses the best range of the demodulator and the deterioration in reception, namely, bit error is caused). According to the embodiment, the reception level notified from the RSSI 61 is compared with a predetermined threshold and is over the threshold, then, the change-over switch 13 of the sharing unit 1 is controlled so as to disconnect the direct connection between the RF switch 12 and the receiving unit 2.

The transmitting unit 7 comprises a modulator 71 for modulating the transmission data to the radio frequency signal and a transmitter high-output amplifier 72 for amplifying power of the radio frequency signal from the modulator 71.

The control unit 8 operates the transmitting unit 7 and the receiving unit 2 in accordance with the transmission timing and the reception timing. Further, the control unit 8 controls the change-over switch 13 of the sharing unit 1 so as to switch the connection of he RF switch 12 to the transmitting unit 7 side or the receiving unit 2 side. The change-over switch 13 is included in the control unit 8, not in the sharing unit 1.

Next, a description is given of the operation for a time-division multiplexing and connecting transceiver and its automatic gain control method for reception with reference to Figs. 2 and 3.

The control unit 8 controls the change-over switch 13 of the sharing unit 1 at the transmission timing so as to switch the connection of the antenna 11 in the RF switch 12 to the transmitting unit 7 side. Further, the control unit 8 controls the operation that the radio frequency signal generated by the transmitting unit 7 is transmitted to the antenna 11. The connecting state of the RF switch 12 is similar to that shown in Fig. 3. However, the state shown in Fig. 3 indicates the connection waves when the reception signal level is high at the reception timing, and is different from the above connecting state of the RF switch 12 in that the signal from the transmitting unit 7 is not outputted.

The control unit 8 controls the change-over switch 13 of the sharing unit 1 at the reception timing so as to switch the connection of the antenna 11 in the RF switch 12 to the receiving unit 2 side. Further, the control unit 8 controls the operation that the radio frequency signal (RF signal) received by the antenna 11 is inputted to the isolator 3 of the receiving unit 2.

The RF signal inputted to the isolator 3 is subjected to predetermined band pass/elimination operation by the RF filter 4 so as to remove the influence of the waves as the obstacle, and is inputted to the amplifying unit 5.

The amplifying unit 5 first amplifies the inputted RF signal by using the low-noise amplifier 51. The amplifying unit 5 directly uses the RF signal or converts the amplified signal into the IF signal. The RF signal or IF signal is amplified by the automatic gain amplifier 52 or the fixing amplifier 54, and is inputted to the demodulating unit 6.

The RSSI 61 of the demodulating unit 6 detects the level (reception level) of the inputted reception signal (RF signal or IF signal), and detects the detected level to the demodulator 62. The demodulator 62 compares the reception level notified from the RSSI 61 with a predetermined threshold. If the reception level is not more than the threshold, the demodulator 62 demodulates the data from the reception signal. If the reception level is more than the threshold, the demodulator 62 sets the connection of the RF switch 12 to the transmitting unit 7 side, and controls the change-over switch 13 of the sharing unit 1 so as to disconnect the direct correction between the RF switch 12 and the receiving unit 2 (in the state shown in Fig. 3).

In the state shown in Fig. 3, the RF switch 12 is connected to the transmitting unit 7. However, the transmitting unit 7 does not send the signal at the reception timing, not at the transmission timing. The RF signal from the antenna 11 is largely attenuated (by, e.g., 20 to 30 dB loss) and is inputted to the receiving unit 2.

The reception signal having the level reduced by the attenuation is inputted to the demodulating unit 6 via the above-mentioned route (isolator 3, the RF filter 4, and the amplifying unit 5), and is demodulated to data. Since the level of the signal processed by the amplifying unit 5 is largely reduced even when the level of the reception signal in the antenna 11 is high, the amplifying unit 5 reduces the control amount for the automatic gain control, and the circuit structure for controlling the automatic gain is simplified.

The demodulator 6 detects that the level of the reception signal is reduced to the predetermined threshold or less and, then, controls the change-over switch 13 so as to return the connection of the RF switch 12 to the receiving unit 2 side. A threshold (L1 ) of the reception level upon switching the connection of the RF switch 12 to the transmitting unit 7 from the receiving unit 2 can be different from a threshold (L2) of the reception level upon returning it to the receiving unit 2 from the transmitting unit 7. Normally, the threshold L1 is higher than the threshold L2. Preferably, hysteresis characteristics are provided so as to prevent the frequent occurrence of switching of the RF switch 12.

The demodulating unit 6 detects the signal level of the reception signal according to the embodiment. However, the present invention is not limited to this and well-known proper means is arranged so that the amplifying unit 5 or a component in front thereof detects the signal level.

Next, a detailed description is given of the operation of the isolator 3 as a feature of the present invention.

In a system for processing data having a large capacity at the high speed under an environment for external propagation in which a reception electric field largely changes at the high speed requires an RF/IF automatic gain control circuit having a simple circuit structure with fast response property, which enables the control operation of the large amount of gain for reception. The RF/IF automatic gain control circuit comprises a small number of gain control components.

In order to realize the above RF/IF automatic gain control circuit, attention is paid to large attenuating property between two connecting points, which are released, of the low-noise amplifier 51 and the antenna 11 of the RF switch 12 used for switching the transmitting and receiving path based on time division for transmission and reception, and the large attenuating property is actively used as a part of an automatic gain control function according to the feature of the present invention.

The RF switch 12 is connected to the transmitting side, though during the reception, and the connection to the receiving side is released. Consequently, the total gain for reception is controlled to largely be reduced at the high speed upon receiving the signal having a high electric field.

Importantly, the circuit structure needs to stably hold the low-noise property of the receiver irrespective of the setting state of the RF switch 12 so as to stably and continuously assure the property of the receiver with the high sensitivity (reference sensitivity property) in the wide input electric field for the reception. Here, considerable points are the noise property and the stability of the first low-noise amplifier 51 for determining the low-noise property of the receiver. These property largely depends on the impedance on the input load side of the first low-noise amplifier 51.

In general, a source impedance in views of the input load side from the input terminal of the first low-noise amplifier 51 (via the RF filter 4) when the RF switch 12 upon inputting the high electric field is switched to the transmitting side (disconnecting state) is extremely apart and is deteriorated from a source impedance (output impedance of the antenna 1 upon setting the antenna 1 in a free propagation space) near 50 $\Omega$ in views of the input load from the low-noise amplifier 51 (via the RF filter 4) when the RF switch 12 is normally connected to the receiving system in the low input electric-field.

In another view, a VSWR (voltage standing wave ratio) when the input side is viewed from the first low-noise amplifier 51 is determined depending on the impedance (VSWR) upon disconnecting the RF switch 12. Generally, the VSWR of the input load is increased upon disconnecting the RF switch 12, namely, upon inputting the signal having the high electric field.

It is premised that the impedance of the load for input is generically 50 $\Omega$ upon connecting the antenna when designing the first low-noise amplifier 51, as shown in Fig. 2. Then, the impedance is converted from the impedance of 50 $\Omega$ (normalization impedance of 50 $\Omega$ = 1 + j0) to a normalization impedance for matching the best noise in views of the input load from the input of the low-noise amplifier. That is, a circuit for matching to the best noise is usually designed.

Reference symbol Zo denotes a normalization impedance of an actual circuit in views of the input side from an output terminal of an input matching circuit when assuming, as one group, the antenna 11 (having approximately 50 Ω), the RF switch 12, the isolator 3, and the RF filter 4, which are arranged to the input side of the low-noise amplifier 51, and an input noise matching circuit positioned on the input side of the low-noise amplifier 51. Reference symbol Zs denotes a source impedance having a best noise NFmin (minimum noise) provided for the low-noise amplifier 51 peculiarly every frequency.

The following formula (1) establishes a relationship among a noise exponent NF of the low-noise amplifier obtained upon arranging an arbitrary input circuit to the input side of the low-noise amplifier, the minimum noise NFmin, the impedance Zo and Zs, and an equivalent input noise resistance Rn.

$$NF\,(dB) = 10 \times Log\left[10^{(NF\min(dB)/10)} + \frac{Rn}{Rs} \times \frac{\left\{(Rs - Ro)^2 + (Xs - Xo)^2\right\}}{(Ro^2 + Xs^2)}\right]$$

The input matching circuit of the low-noise amplifier is previously designed so that the impedance Zo is equal to the impedance Zs by the above formula (1). Thus, the noise exponent NF (= minimum noise NFmin) of the low-noise amplifier 51 is obtained.

As the feature according to the present invention, the input isolator 3 is inserted. Consequently, not only when the RF switch 12 shown in Fig. 2 is connected to the receiving system and the input electric field is low, but also when the RF switch 12 shown in Fig. 3 is connected to the transmitting system and is released from the receiving system and the input electric field is high, the change in impedance of the RF switch 12 in views of the input side from the low-noise amplifier 51 is masked by the inserted isolator 3.

The 50 Ω terminating unit 32 in the isolator 3 has the determined input impedance irrespective of the state of the RF switch 12. Thus, the noise exponent NF of the low-noise amplifier 51 maintains the minimum value irrespective of the connecting and disconnecting state of the RF switch 12.

The stability of the low-noise amplifier 51 is similar to the foregoing. The 50 Ω terminating unit 32 in the isolator has the determined input impedance irrespective of the state of the RF switch 12. Thus, the stability for operation of the low-noise amplifier 51 is always held irrespective of the input impedance. The problem such as the unnecessary oscillation is not caused.

As a result of inserting the input isolator 3, the input impedance of the first low-noise amplifier 51 always and stably becomes approximately 50 Ω. That is, the low-noise property of the first low-noise amplifier 51 is stably assured when the input electric field is high. Therefore, the input level of the demodulator is converged throughout the wide input dynamic range for reception at the high speed and the reception sensitivity is improved. Namely, the receiver with high performance is realized.

Industrial Applicability

As mentioned above, the time-division multiplexing and connecting transceiver actively uses, as a part of the automatic gain control function, the large attenuating property between the two connecting points, which are released, of the receiving system (low-noise amplifying unit) and the antenna of the change-over switch (RF switch) used for switching the transmitting and receiving path based on time division for transmission and reception.

In addition, the isolator is inserted between the change-over switch and the first amplifier (low-noise amplifier) under such the impedance condition on the input side of the first amplifier of the receiving system that the impedance becomes constant irrespective of the setting mode of the change-over switch. When the high electric-field signal is received and is over the threshold of the level inputted and detected by the demodulating means, the change-over switch is connected to the transmitting side though the signal is received.

According to the present invention, a system is provided for radio communication of data having a large capacity at the high speed under a strict environment for external propagation, in which a necessary amplitude for the large total gain for reception is varied at the high speed and the electric field for reception changes at the high speed within the wide dynamic range.

According to the present invention, preferably, a time-division multiplexing and connecting transceiver with high reliability and high reception sensibility is realized, in which the reception property is ensured at the maximum level so as to prevent the deterioration in reception such as the bit error, by assuring the fast convergence of the input level in the demodulating means and the low-noise and the stability of the receiver.

**Claims**

1. A time-division multiplexing and connecting transceiver for transmitting and receiving a radio frequency signal based on time division at different timings by sharing an antenna, said time-division multiplexing and connecting transceiver comprising:

   a change-over switch for switching and connecting said antenna to one of a transmitting system and a receiving system; and
   control means for switching said change-over switch and outputting a transmission signal to said antenna at a transmission timing, for determining a reception level of a reception signal at a reception timing, for switching said change-over switch to the receiving system and directly inputting the reception signal from said antenna to the receiving system when the reception level is not more than a predetermined value, and for switching said change-over switch to the transmitting system and inputting the signal largely attenuated and leaked from said antenna to the receiving system when the reception level is more than said predetermined value.

2. A time-division multiplexing and connecting transceiver according to Claim 1, wherein an isolator for matching an input impedance of a first amplifier of the receiving system is arranged between said change-over switch and said first amplifier, irrespective of a switching state of said change-over switch.

3. A time-division multiplexing and connecting transceiver according to Claim 2, further comprising:

   demodulating means for demodulating data from the reception signal,
   wherein said demodulating means comprises means for determining the reception level of the reception signal and means for switching said change-over switch to the transmitting system when the reception level is more than the predetermined value.

4. A time-division multiplexing and connecting transceiver according to Claim 3, wherein an arbitrary number of automatic gain control amplifiers are arranged between said change-over switch and said demodulating means, as amplifiers of the radio frequency signal or an intermediate frequency signal, and
   the automatic gain control of the reception signal is performed individually by said change-over switch and said automatic gain control amplifier.

5. An automatic gain control method for reception of a time-division multiplexing and connecting transceiver for transmitting and receiving a radio frequency signal based on time division at different timings by sharing an antenna, said automatic gain control method for reception comprising:

   a step of determining a reception level of a reception signal at a reception timing;
   a step of switching a change-over switch for switching and connecting said antenna to one of a transmitting system and a receiving system when the reception level is not more than a predetermined value and directly inputting the reception signal from said antenna to the receiving system; and
   a step of switching said change-over switch to the transmitting system and inputting the signal largely attenuated and leaked from said antenna to the receiving system, when the reception level is more than said predetermined value.

6. An automatic gain control method for reception according to Claim 5, wherein the automatic gain control is performed individually by said change-over switch and an automatic gain control amplifier arranged between said change-over switch and demodulating means for demodulating data from the reception signal, as an amplifier of the radio frequency signal or an intermediate frequency signal.

RECEPTION SIGNAL

11 ANTENNA

10

RF SWITCH
12

SHARING UNIT

20

RECEIVING UNIT

4 FILTER

AMPLIFYING 5 UNIT

51    52

DEMODULATING 60 UNIT

61

R S S I

620 DEMODULATOR

7

HIGH-OUTPUT AMPLIFIER OF 72 TRANSMITTER

71

MODULATOR

TRANSMITTING UNIT

80

CONTROL UNIT

FIG. 1

RECEPTION SIGNAL

11 ANTENNA

1 RF SWITCH

2

3 ISOLATOR

AMPLIFYING
5 UNIT

DEMODULATING
6 UNIT

12

4 FILTER

31

51    52

61

RSSI

62 DEMODULATOR

32

RECEIVING
UNIT

13

CHANGE-
OVER
SWITCH

7

HIGH OUTPUT AMPLIFIER
72 OF TRANSMITTER

71

MODULATOR

SHARING
UNIT

TRANSMITTING
UNIT

8

CONTROL UNIT

FIG. 2

FIG. 3

EP 1 361 666 A1

FIG. 4A

FIG. 4B

12

FIG. 4C

FIG. 4D

## INTERNATIONAL SEARCH REPORT

| International application No. |
| --- |
| PCT/JP02/00599 |

A. CLASSIFICATION OF SUBJECT MATTER
   Int.Cl⁷ H04B1/40

According to International Patent Classification (IPC) or to both national classification and IPC

B. FIELDS SEARCHED

Minimum documentation searched (classification system followed by classification symbols)
   Int.Cl⁷ H04B1/38-1/58

Documentation searched other than minimum documentation to the extent that such documents are included in the fields searched
   Jitsuyo Shinan Koho          1922-1996    Jitsuyo Shinan Toroku Koho    1996-2002
   Kokai Jitsuyo Shinan Koho    1971-2002    Toroku Jitsuyo Shinan Koho    1994-2002

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 8-237160 A   (Oki Electric Industry Co., Ltd.),<br>13 September, 1996 (13.09.96),<br>Fig. 1<br>(Family: none) | 1,5<br>2-4,6 |
| X<br>Y | JP 9-130292 A  (NEC Kansai, Ltd.),<br>16 May, 1997 (16.05.97),<br>Fig. 1<br>(Family: none) | 1,5<br>2-4,6 |
| X<br>Y | JP 10-256937 A  (Matsushita Electric Industrial Co.,<br>Ltd.),<br>25 September, 1998 (25.09.98),<br>Fig. 1<br>(Family: none) | 1,5<br>2-4,6 |
| Y | JP 2000-91943 A  (Mitsubishi Electric Corp.),<br>31 March, 2000 (31.03.00),<br>Fig. 2  (Family: none) | 2-4 |

☒  Further documents are listed in the continuation of Box C.          ☐      See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 April, 2002 (18.04.02) | 30 April, 2002 (30.04.02) |

| Name and mailing address of the ISA/<br>   Japanese Patent Office | Authorized officer |
| --- | --- |
| Facsimile No. | Telephone No. |

Form PCT/ISA/210 (second sheet) (July 1998)

**INTERNATIONAL SEARCH REPORT**

International application No.

PCT/JP02/00599

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 5-95336 A (Casio Computer Co., Ltd.), 16 April, 1993 (16.04.93), Fig. 1 (Family: none) | 4,6 |

Form PCT/ISA/210 (continuation of second sheet) (July 1998)